Europäisches Patentamt

**European Patent Office**

**Office européen des brevets**

(19)

(11) Veröffentlichungsnummer: **0 109 519**

**B2**

(12) **NEUE EUROPÄISCHE PATENTSCHRIFT**

(45) Veröffentlichungstag der neuen Patentschrift:
15.11.89

(51) Int. Cl.⁴: **H 02 P 7/62**, H 02 P 1/30

(21) Anmeldenummer: **83109875.1**

(22) Anmeldetag: **04.10.83**

(54) **Drehstrom-Asynchronmotor.**

(30) Priorität: **23.10.82 DE 3239284**

(43) Veröffentlichungstag der Anmeldung:
**30.05.84 Patentblatt 84/22**

(45) Bekanntmachung des Hinweises auf die Patenterteilung:
**26.03.86 Patentblatt 86/13**

(45) Bekanntmachung des Hinweises auf die Entscheidung
über den Einspruch:
**15.11.89 Patentblatt 89/46**

(84) Benannte Vertragsstaaten:
**AT BE CH DE FR GB IT LI LU NL SE**

(56) Entgegenhaltungen:
**DE-A-2 921 678**
**FR-A-2 452 200**
**US-A-4 207 510**

**Patent Abstracts of Japan Band 6, Nr. 164, 27.**
**August 1982**
**CONTROL ENGINEERING, Band 28, Nr. 11,**
**November 1981, St. Pontiac N. ANDREIEV**
**"Software driven LSI chips are key to future AC**
**drives", Seiten 62-64**
**Eisenbahntechnische Rundschau ETR (30), 9-1981,**
**Seiten 647-650 + 652**
**Elektrische Maschinen von Bödefeld und Sequenz**
**6. Auflage (Springer 1962) Seite 182**
**"Elektrische kleinstmotoren und ihr Einsatz" von**
**Helmut Moezzla (Export 1979) Seiten 52-54**
**Hütte "Elektrische Energietechnik" Band 1**
**Maschinen 4. Auflage (Springer 1978) Seiten 464-465**

(73) Patentinhaber: **Gaus, Ernst, Klammweg 72, D-7500**
**Karlsruhe 31 (DE)**

(72) Erfinder: **Gaus, Ernst, Klammweg 72, D-7500**
**Karlsruhe 31 (DE)**

(74) Vertreter: **Geitz, Heinrich, Dr.- Ing., Postfach 2708**
**Kaiserstrasse 156, D-7500 Karlsruhe 1 (DE)**

(56) Entgegenhaltungen: (Fortsetzung)
**AEG Mitteilungen 54 (1964) Heft 1/2 Seiten 89-106**
**ETZ B, Band 16 (1964) Heft 24 Seiten 703-707**

EP 0 109 519 B2

**Beschreibung**

Die Erfindung bezieht sich auf einen Drehstrom-Asynchronmotor für den Antrieb des Kältekompressors eines für den Einsatz in Fahrzeugen mit eigenem Bordnetz bestimmten Kälteaggregates, der eine Steuereinheit mit einem an eine Gleichstromquelle anlegbaren Wechselrichter zum Erzeugen von Drehstrom und einen Frequenzwandler zum Steuern der Drehstromfrequenz besitzt.

Aus der DE-A-2 129 678 ist bereits die Verwendung eines Drehstrom-Asynchronmotors, der eine mit einem an eine Gleichstromquelle anlegbaren Neunphasen-Wechselrichter zum Erzeugen von Drehstrom und mit einem Frequenzwandler zum Absenken der Drehstromfrequenz unter eine bestimmte Nennfrequenz ausgerüstete Steuereinheit besitzt, für den Antrieb des Kompressors eines für den Einsatz in Fahrzeugen mit eigenem Gleichstrom-Bordnetz bestimmten Kälteaggregats bekannt.

Ausgehend von diesem Stande der Technik besteht die der Erfindung zugrundeliegende Aufgabe in einer Verbesserung des Anlaufverhaltens eines derartigen Motors bei im wesentlichen konstanter Stator-Phasenspannung, die im Rahmen wirtschaftlich vertretbarer Möglichkeiten über den von dem verfügbaren Gleichstrom-Bordnetz vorgegebenen Spannungswert nicht erhöht werden kann.

Diese Aufgabe ist bei einem Drehstrom-Asynchronmotor der eingangs genannten Art dadurch gelöst, daß die Frequenz des Drehstroms etwa umgekehrt proportional zum Motorlastmoment gesteuert wird.

Bekanntlich ist das Anlaufmoment eines Drehstrom-Asynchronmotors proportional zu dem im Motor (Käfig) auftretenden Phasenstrom, der seinerseits wiederum von der in dem Käfig induzierten Phasenspannung und vom Blindwiderstand abhängig ist. Bei im wesentlichen konstanter Stator-Phasenspannung, die im Rahmen wirtschaftlich realisierbarer Möglichkeiten über den von dem verfügbaren Netz vorgegebenen Spannungswert nicht erhöht werden kann, führt die erfindungsgemäße Absenkung der Drehstromfrequenz umgekehrt proportional zur Motorlast zu einer Erhöhung des Kurzschlußstroms, was gleichbedeuteund mit einer Erhöhung des Drehmomentes ist.

Zwar ist aus den Lehrbüchern "Elektrische Maschinen" von Bödefeld und Sequenz, 6. Auflage, Springer-Verlag 1962, Seite 182, und Elektrische Kleinstmotoren und ihr Einsatz" von Moczala, Export-Verlag 1979, Seiten 52 bis 54, bekannt, daß sich das Moment bei Wechselstrommmaschinen umgekehrt proportional zur Stromfrequenz verhält, aber diese Literaturstellen können keine Anregung dafür geben, bei einem Drehstrom-Asynchronmotor mittels einer Steuereinheit mit einem an eine Gleichspannungsquelle (Bordnetz) anlegbaren Wechselrichter zum Erzeugen von Drehstrom und mit einem Frequenzwandler zum Absenken der Drehstromfrequenz unter eine vorbestimmte Nennfrequenz die Frequenz umgekehrt proportional zur Motorlast zu steuern, um dadurch eine wünschenswerte Verbesserung des Anlaufmoments des Motors zu verwirklichen.

Eine zweckmäßige Weiterbildung der Erfindung besteht darin, daß die Steuerung der Drehstromfrequenz umgekehrt proportional zum Laststrom des Motors erfolgt. Dies bedeutet, daß bei der Verwendung einer derartigen Asynchronmaschine als Antriebsmotor für einen Kältekompressor angesichts der unter besonderen Einsatzbedingungen erforderlichen großen Anlaufmomente solcher Kompressoren eine Reduzierung der Drehstromfrequenz bei der Inbetriebnahme eines Kälteaggregates zweckmäßig ist, was erfindungsgemäß durch eine Frequenzsteuerung etwa umgekehrt proportional zur Motorlast bzw. zum Laststrom des Motors erreicht wird. Gemäß einer anderen Weiterbildung der Erfindung kann die Frequenz auch in Abhängigkeit vom Spannungsabfall an einem vom Laststrom durchflossenen Widerstand gesteuert werden.

Eine Ausgestaltung der Erfindung sieht vor, daß beim Einschalten des Motors die Drehstromfrequenz von einem vorbestimmten Wert unter der Nennfrequenz an etwa zeitproportional an eine untere Grenze des Regelbereichs und danach umgekehrt proportional zu dem mit dem Anlauf ab fallenden Motorlastmoment auf die Nennfrequenz gesteuert, also angehoben wird.

Eine weitere vorteilhafte Ausgestaltung der Erfindung besteht darin, daß die Steuereinheit in an sich bekannter Weise mit einer Einrichtung zum Steuern der Spannungshöhe des Drehstroms versehen ist.

Gleichstrom-Bordnetze sind bekanntlich in weit höherem Maße Spannungsschwankungen unterworfen als beispielsweise Wechselstromnetze. Da dies eine Stabilisierung der Spannungshöhe des Drehstroms zweckmäßig erscheinen läßt, wird nach einer weiteren Ausgestaltung der Erfindung die Spannungshöhe des Drehstroms unter Berücksichtigung der Drehstromfrequenz bei sich ändernder Spannungshöhe der Gleichspannungsquelle im wesentlichen konstant gehalten.

Da beim Absenken der Drehstromfrequenz eine Sättigung des Magnetkreises des Motors und demgemäß eine überproportionale Zunahme des aufgenommenen Stromes eintritt, ohne zu einer dieser erhöhten Stromaufnahme entsprechenden Zunahme des Drehmomentes zu führen, sieht eine weitere Ausgestaltung der Erfindung vor, daß die Spannungshöhe des Drehstroms entsprechend der Reduzierung der Drehstromfrequenz abgesenkt wird.

Zweckmäßigerweise ist eine derartige Spannungsregulierung dadurch zu realisieren, daß Teile der Spannungskurve ausgetastet werden, ohne daß dadurch Gleichstromanteile im Drehstrom entstehen.

Eine Absenkung der Drehstromfrequenz bei gleichzeitiger Absenkung der Spannungshöhe führt zu einer Reduzierung des Blindwiderstandes und damit zu einer Erhöhung des Kurzschlußstroms im Motor, was gleichbedeutend mit einer Erhöhung des Motor-Drehmomentes ist.

Eine andere Weiterbildung der Erfindung sieht vor, daß der Wechselrichter, bei dem es sich um einen Dreiphasen-Wechselrichter handelt, eine in an sich bekannter Weise aus Leistungstransistoren aufgebaute Endstufe mit Ansteuerung der drei Motorwicklungen, eine Einrichtung zum Erzeugen der Ansteuersignale für die Endstufe und eine Mikroprozessor-Steuerung besitzt. Die Motorwicklungen sollten dabei im Interesse eines erwünschten großen Anlaufmomentes zweckmäßig im Dreieck geschaltet sein. Die als Leistungsschalter ausgebildete Endstufe kann mit einem Spannungswandler zum Erzeugen der Ansteuerspannung für die Endstufe versehen sein.

Nach einem ebenfalls ausgestaltenden Merkmal ist der Endstufe des Dreiphasen-Wechselrichters ein Pegelumsetzer zum Anpassen der Spannungspegel der Einrichtung zum Erzeugen der Ansteuersignale für die Endstufe vorgeschaltet und die Mikroprozessor-Steuerung besitzt zwei Analog-Digitalwandler, von denen der eine an der Eingangsspannung der Gleichspannungsquelle liegt, während der andere an eine Teilspannung gelegt ist, die als Spannungsabfall an einem vom Laststrom des Motors durchflossenen Widerstand auftritt. Die Analog-Digitalwandler können dabei im Mikroprozessor enthalten sein.

In gleichfalls weiterer Ausgestaltung der Erfindung besitzt die Mikroprozessor-Steuerung einen an der Eingangsspannung der Gleichstromquelle liegenden Spannungsregler zum Erzeugen ihrer Betriebsspannung, dem als Schutz gegen Verpolung eine Diode vorgeschaltet ist. Die Einrichtung zum Erzeugen der Ansteuersignale für die Endstufe ist zweckmäßigerweise so ausgelegt, daß beim Einschalten des Motors die an den Motorwicklungen anliegende Frequenz des Drehstroms auf ihren minimalen Wert eingestellt ist und nach dem Anlauf des Motors zeitproportional oder in Abhängigkeit von der Motorlast auf ihren Nennwert ansteigt. Nach dem Ansteigen der Drehstromfrequenz auf ihren Nennwert erfolgt eine Regelung der Frequenz in Abhängigkeit von der Motorlast.

Eine weitere wichtige Ausgestaltung der Erfindung besteht schließlich darin, daß die Wicklungen des Motors in jeweils zwei oder mehere Zweige aufgeteilt sein können und daß diese Zweige einer jeden Motorwicklung von der Endstufe des Dreiphasen-Wechselrichters entsprechend der Ansteuerung der Endstufe über voneinander elektrisch unabhängige Leistungstransistoren an und abgeschaltet werden. Die Zweige der einzelnen Motorwicklungen können dabei untereinander gleich oder auch verschieden ausgelegt sein. Als zweckmäßig hat sich erwiesen, die Zweige einer Motorwicklung in bekannter Weise untereinander gleich auszubilden.

Eine Ausführungsform der Erfindung soll nachstehend anhand der beigefügten Zeichnung erläutert werden. In schematischen Ansichten zeigen:

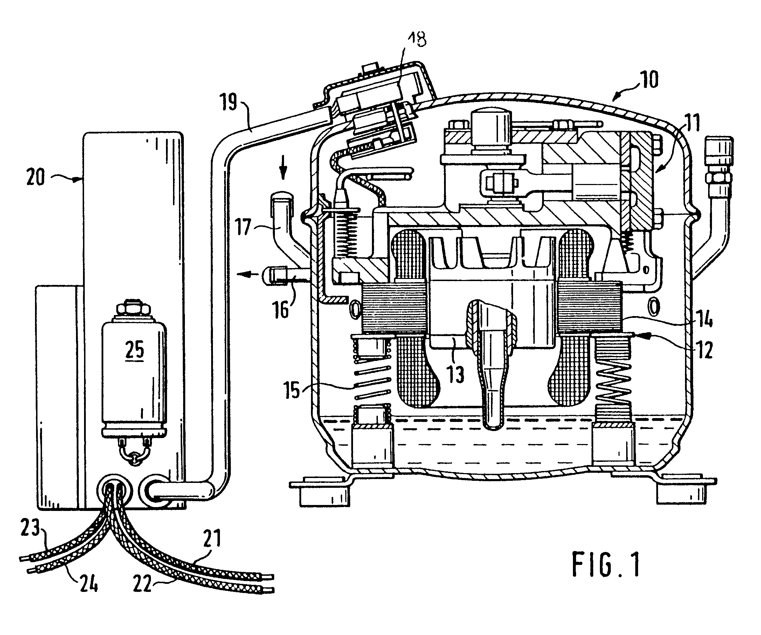

Figur 1    einen Kältekompressor mit einem Drehstrom-Asynchronmotor als Antriebsmaschine, die in einer hermetisch verschlossenen Kapsel aufgenommen sind, in einer Schnittansicht und mit einer externen Steuereinheit für den Motor,

Figur 2    ein Blockschaltbild der Steuereinheit und

Figur 3    die Aufteilung der im Dreieck geschalteten Motorwicklungen in je zwei Wicklungszweige und die Ausbildung der Endstufe der Steuereinheit mit je zwei Aus- und Eingängen für jede Motorwicklung.

Innerhalb der hermetisch verschlossenen Kapsel 10 sind der hinsichtlich seines Aufbaues im einzelnen hier nicht interessierende Kältekompressor 11, bei dem es sich um einen Kolbenkompressor handelt, und der Antriebsmotor 12 für den Kompressor aufgenommen. Sei dem Antriebsmotor handelt es sich um einen Drehstrom-Asynchronmotor mit im Dreieck geschalteten Motorwicklungen, dessen Rotor 13 mit dem Kolbenkompressor in direkter Antriebsverbindung steht. Der Stator 14 des Asynchronmotors und der Kolbenkompressor sind in im einzelnen hier nicht interessierender Weise fest miteinander verbunden und die Gesamtanordnung ist innerhalb der Kapsel 10 mittels Stützfedern 15 begrenzt elastisch gelagert. Aus der Kapsel herausgeführt sind lediglich eine Zu- und Rückführleitung 16, 17 für das Kältemedium zu einem externen Wärmetauscher (nicht gezeigt) und die elektrischen Zu- und Rückführleitungen zu den einzelnen Motorwicklungen, die unter Aufrechterhaltung der hermetischen Abschließung der Kapsel im Bereich einer besonderen Stromdurchführung 18 durch die Kapselwand hindurchgeführt sind, was jedoch im einzelnen hier nicht interessiert. Außerhalb der Kapsel sind die Zu und Rückführleitungen zu den Motorwicklungen zu einem Kabel 19 zusammengefaßt, das zu der extern angeordneten Steuereinheit 20 hinführt.

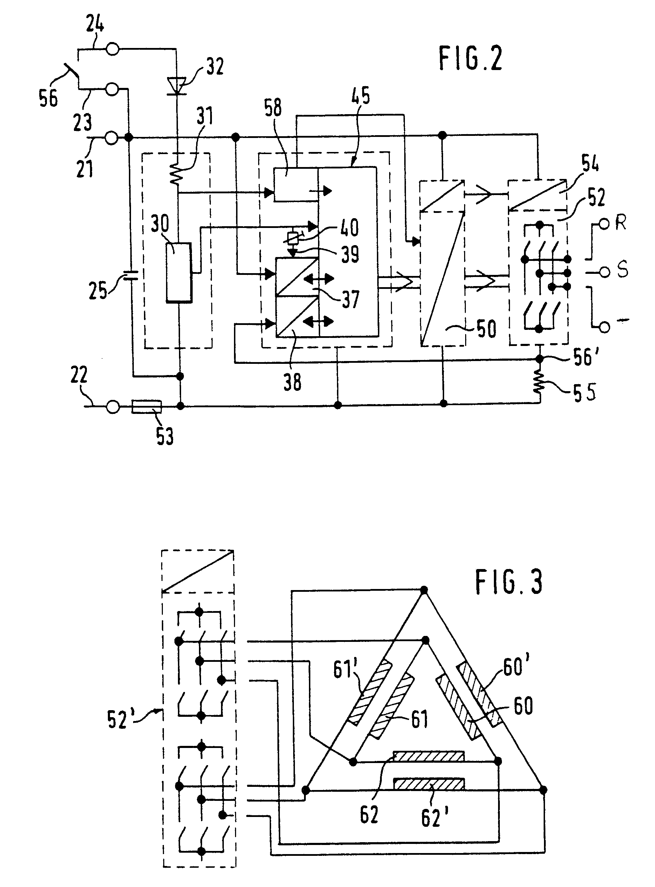

Die Steuereinheit 20, deren Aufbau nachstehend noch in Verbindung mit Fig. 2 näher erläutert werden soll, liegt über Leitungen 21, 22 an einer Batterie, an einem Gleichstromnetz an gleichgerichtetem Drehstrom oder an Wechselstrom. Zwei weitere Leitungen 23, 24 führen zu einem Thermostaten, dessen Funktion ebenfalls in Verbindung mit dem Blockschaltbild (Fig. 2) erläutert werden soll. Schließlich ist die Steuereinheit noch mit einem im einzelnen hier nicht interessierenden Kondensator 25 bestückt, der in bekannter Weise zum Unterdrücken bzw. Glätten von Störfrequenzen dient.

Das Blockschaltbild gemäß Fig. 2 veranschaulicht die Steuereinheit 20 in ihrer Gesamtheit, die einen Dreiphasen-Wechselrichter und eine Mikroprozessor-Steuerung umfaßt. Die auf den Anschluß an 24 Volt, oder auch an 12 Volt Gleichstromnetze ausgelegte Steuereinheit 20 erzeugt Drehstrom einer vorbestimmten Frequenz zur Versorgung der im Dreieck geschalteten Wicklungen des Drehstrom-Asynchronmotors 12.

Die Steuereinheit 20 besitzt einen Spannungsregler 30 zum Erzeugen der erforderlichen Betriebsspannung für die gesamte Steuerelektronik. Dieser Spannungsregler ist über eine Diode 32 und einen Ohmschen Widerstand 31 sowie einen Thermostatschalter 56 an die Netzspannung anlegbar. In Parallelschaltung zu dem Spannungsregler 30 liegt der Kondensator 25.

Das zweite Bauglied der Steuereinheit besteht aus einem mit zwei Analog-Digitalwandlern 37, 38 gekoppelten Mikroprozessor 45. Die Analog-Digitalwandler werden von der vom Spannungsregler 30 bereitgestellten Betriebsspannung versorgt, wobei ein im Eingang 39 dieser Betriebsspannung angeordneter Regelwiderstand 40 zu einem etwaig erforderlichen Abgleichen der Wandler dient. Die genannten Analog-Digitalwandler können je nach Ausführungsform Bestandteil von dem Mikroprozessor sein. Der Analog-Digitalwandler 37 liegt ferner an Eingangsspannung. Der zweite Analog-Digitalwandler 38 liegt eingangsseitig an einer dem Motorlaststrom proportionalen Spannung, deren Erzeugung unten noch erläutert wird.

Zum Erzeugen der eigentlichen Steuersignale dient eine dem Mikroprozessor 45, die Analog-Digitalwandler 37, 38 und eine Überwachungsschaltung 58 umfassende Steuerelektronik. Der Mikroprozessor 45 übernimmt sämtliche Steuerungsaufgaben und dient der Erzeugung der Ansteuersignale für die Endstufe 52 in Abhängigkeit von den Eingangsgrößen, die von den Analog-Digitalwandlern 37, 38 kommen, desgleichen auch für die Takterzeugung eines der Endstufe zugeordneten Spannungswandlers 54.

Dem Mikroprozessor 45 nachgeschaltet ist ein Pegelumsetzer 50, der die Aufgabe hat, die Steuersignale des Mikroprozessors an die Erfordernisse der Endstufe 52 der Elektronik hinsichtlich seines Pegels anzupassen. Dieser Pegelumsetzer 50 und die Endstufe 52 werden nicht von der vom Spannungsregler 30 erzeugten Betriebsspannung versorgt, sondern liegen über eine entsprechende Absicherung 53 in Parallelschaltung an der Eingangsspannung der Wechselrichter.

Die Endstufe 52 dient zum An- bzw. Ausschalten der drei Wicklungen des Drehstrom-Asynchronmotors, die im Dreieck geschaltet sind, und ist demgemäß mit je einem Aus- und Eingang R, S, T für die Motorwicklungen versehen. Bei der Endstufe handelt es sich um einen neben den benötigten Ansteuer- und den Entstörungsbauelementen aus Leistungstransistoren aufgebauten Leistungsschalter. Der ggf. zugeordnete Spannungswandler 54 dient zur Erzeugung der notwendigen Ansteuerspannung für die Endstufe 52. Ferner ist der Endstufe in Reihenschaltung ein Widerstand 55 als Shunt zugeordnet.

Der Eingang des zweiten Analog-Digitalwandlers 38 ist auf einen Abgriff 56' zwischen dem genannten Shunt 55 und der Endstufe 52 geschaltet, so daß an dem zweiten Analog-Digitalwandler 38 als Eingangsspannung der unter Last an dem Shunt auftretende Spannungsabfall als Steuerspannung anliegt.

Bei eingeschalteter Steuerelektronik, das heißt bei in Schließlage liegendem Thermostatschalter 56 und bei laufendem Motor erzeugt die Stromaufnahme des Motors an dem Shunt 55 einen der Stromaufnahme entsprechenden Spannungsabfall, der als Steuerspannung über den zweiten Analog-Digitalwandler 38 dem Mikroprozessor 45 zugeführt wird. In Abhängigkeit von dieser Ansteuerung des Mikroprozessors erzeugt dieser die erforderlichen sechs Ansteuerphasen. Angesichts der über den Shunt 55 laststromabhängig erzeugten Steuerspannung besteht zwischen der Stromaufnahme des Motors und der Frequenz der Ansteuerphasen ein direkter Zusammenhang. Der Analog-Digitalwandler 37 liegt unmittelbar an Eingangsspannung und bewirkt, daß die Spannung des Drehstroms bei vorgegebener Frequenz eine vorbestimmte Höhe nicht überschreitet. Ferner übernimmt die Steuerelektronik sämtliche Überwachungs- und Steuerfunkionen, mit hin auch die Überwachung der Versorgungsspannung der Elektronik und des Motorstroms. Die Anordnung ist so ausgelegt, daß der Dreiphasen-Wechselrichter beim Anschalten des Motors Drehstrom mit der niedrigst möglichen Frequenz erzeugt, die dann zeitproportional an die untere Grenze des Regelbereichs herangeführt und danach in Abhängigkeit von der auftretenden Motorlast bis zur vorbestimmten Nennfrequenz erhöht wird.

Bei der Alternativlösung nach Fig. 3 ist jede Motorwicklung in zwei Zweige 60, 60'; 61, 61', 62, 62' aufgeteilt, die elektrisch unabhängig voneinander versorgt werden. Demgemäß besitzt die Endstufe 52' des in diesem Falle einzusetzenden Dreiphasen-Wechselrichters, der nicht weiter dargestellt ist, je Zweig einer jeden Motorwicklung die drei Ausgänge R, S, T, wobei das An- und Abschalten des jeweiligen Zweiges über jeweils elektrisch voneinander unabhängige Leistungstransistoren erfolgt.

**Patentansprüche**

1. Drehstrom-Asynchronmotor für den Antrieb des Kältekompressors eines für den Einsatz in Fahrzeugen mit eigenem Bordnetz bestimmten Kälteaggregats, der eine Steuereinheit mit einem an eine Gleichstromquelle anlegbaren Wechselrichter zum Erzeugen von Drehstrom und einen Frequenzwandler zum Steuern der Drehstromfrequenz besitzt,
dadurch gekennzeichnet,
daß die Frequenz des Drehstroms etwa umgekehrt proportional zum Motorlastmoment gesteuert ist.

2. Motor nach Anspruch 1, dadurch gekennzeichnet, daß die Frequenz des Drehstroms etwa umgekehrt proportional zum Laststrom des Motors (12) gesteuert ist.

3. Motor nach Anspruch 2, dadurch gekennzeichnet, daß die Steuerung der Drehstromfrequenz in Abhängigkeit vom Spannungsabfall an einem vom Laststrom durchflossenen Widerstand (55) erfolgt.

4. Motor nach einem der Ansprüche 1 bis 3, dadurch gekennzeichnet, daß beim Einschalten des Motors die Drehstromfrequenz von einem vorbestimmten Wert unter der Nennfrequenz an etwa zeitproportional an eine untere Grenze des Regelbereiches und danach umgekehrt proportional zu dem mit dem Anlauf abfallenden Motorlastmoment auf Nennfrequenz gesteuert wird.

5. Motor nach einem der Ansprüche 1 bis 4, dadurch gekennzeichnet, daß die Steuereinheit (20) mit einer Einrichtung zum Steuern der Spannungshöhe des Drehstroms versehen ist.

6. Motor nach Anspruch 5, dadurch gekennzeichnet, daß die Spannungshöhe des Drehstroms unter Berücksichtigung der Drehstromfrequenz bei sich ändernder Spannungshöhe der Gleichstromquelle im wesentlichen konstant gehalten wird.

7. Motor nach einem der Ansprüche 1 bis 4, dadurch gekennzeichnet, daß die Spannungshöhe des Drehstroms etwa proportional zur Reduzierung der Drehstromfrequenz abgesenkt wird.

8. Motor nach Anspruch 7, dadurch gekennzeichnet, daß die Spannung des Drehstroms dadurch realisiert ist, daß Teile der Spannungskurve ausgetastet werden.

9. Motor nach Anspruch 5, dadurch gekennzeichnet, daß der Wechselrichter bei dem es sich um einen Dreiphasen-Wechselrichter handelt, eine aus Leistungstransistoren aufgebaute Endstufe (52, 52') mit Ansteuerung der drei Motorwicklungen, eine Einrichtung zum Erzeugen der Ansteuersignale für die Endstufe und eine Mikroprozessor-Steuerung (45) besitzt.

10. Motor nach Anspruch 5, dadurch gekennzeichnet, daß die als Leistungsschalter ausgebildete Endstufe (52, 52') mit einem Spannungswandler (54) zum Erzeugen der Ansteuerspannung für die Endstufe versehen ist.

11. Motor nach Anspruch 9 oder 10, dadurch gekennzeichnet, daß der Endstufe (52, 52') ein Pegelumsetzer (50) zum Anpassen der Spannungspegel des Mikroprozessors (45) zum Erzeugen der Ansteuersignale für die Endstufe vorgeschaltet ist.

12. Motor nach einem der Ansprüche 9 bis 11, dadurch gekennzeichnet, daß die Mikroprozessor-Steuerung zwei Analog-Digitalwandler (37, 38) besitzt, von denen der eine an der Eingangsspannung der Gleichstromquelle liegt, während der andere an eine Teilspannung gelegt ist, die als Spannungsabfall an einem vom Laststrom durchflossenen Widerstand (55) auftritt.

13. Motor nach einem der Ansprüche 9 bis 12, dadurch gekennzeichnet, daß die Mikroprozessor-Steuerung einen an der Eingangsspannung der Gleichstromquelle liegenden Spannungsregler (30) zum Erzeugen einer Betriebsspannung aufweist, dem als Schutz gegen Verpolung eine Diode (32) vorgeschaltet ist.

14. Motor nach einem der Ansprüche 1 bis 9, dadurch gekennzeichnet, daß der Mikroprozessor (45) als Einrichtung zum Erzeugen der Ansteuersignale für die Endstufe (52, 52') beim Einschalten des Motors die Drehstromfrequenz auf ihren minimalen Wert einstellt und nach dem Motoranlauf zeitproportional oder in Abhängigkeit von der Motorlast auf ihren Nennwert anhebt.

15. Motor nach einem der Ansprüche 9 bis 14, dadurch gekennzeichnet, daß die Wicklungen des Motors in jeweils wenigstens zwei Zweige (60, 60'; 61, 61'; 62, 62') aufgeteilt sind und daß die Zweige einer jeden Wicklung von der Endstufe (52') des Dreiphasen-Wechselrichters entsprechend ihrer Ansteuerung über voneinander elektrisch unabhängige Leistungstransistoren an- und abgeschaltet werden.

16. Motor nach Anspruch 15, dadurch gekennzeichnet, daß die Zweige (60, 60'; 61, 61'; 62, 62') einer Motorwicklung untereinander gleich ausgelegt sind.

**Claims**

1. Polyphase asynchronous motor for the drive of the refrigeration compressor of a refrigerator, which is intended for the use in vehicles with their own on-board power supply and in which a control unit with a invertor connectible to a source of direct current for the generation of polyphase current and with a frequency converter for the control of the frequency of the polyphase current is provided, characterised thereby, that the frequency of the polyphase current is controlled to be about inversely proportional to the motor load moment.

2. Motor according to claim 1, characterised thereby, that the frequency of the polyphase current is controlled to be about inversely proportional to the load current of the motor (12).

3. Motor according to claim 2, characterised thereby, that the control of the frequency of the polyphase current takes place in dependence on the voltage drop across a resistor (55) flowed through by the load current.

4. Motor according to one of the claims 1 to 3, characterised thereby, that on the motor being switched on, the frequency of the polyphase current is controlled about proportionally to time to increase from a predetermined value below the nominal frequency to a lower limit of the regulating range and thereafter towards the nominal frequency at a rate inversely proportional to the motor load moment decreasing during the starting-up.

5. Motor according to one of the claims 1 to 4, characterised thereby, that the control unit (20) is provided with an equipment for the control of the voltage amplitude of the polyphase current.

6. Motor according to claim 5, characterised thereby, that the voltage amplitude of the polyphase current is kept substantially constant with changing voltage amplitude of the source of direct current while taking care of the frequency of the polyphase current.

7. Motor according to one of the claims 1 to 4, characterised thereby, that the voltage amplitude of the polyphase current is lowered about proportionally to the reduction in the frequency of the polyphase current.

8. Motor according to claim 7, characterised thereby, that the voltage of the polyphase current is realised thereby, that parts of the voltage waveform are keyed out.

9. Motor according to one of the claims 1 to 4, characterised thereby, that the three-phase invertor possesses an end stage (52, 52') built up of power transistors with drive of the three motor windings, an equipment for the generation of the driving signals for the end stage and a microprocessor control (45).

10. Motor according to claim 5, characterised thereby, that the end stage (52, 52') constructed as power switch is provided with a voltage convertor (52) for the generation of the driving voltage for the end stage.

11. Motor according to claim 9 or 10, characterised thereby, that connected in front of the end stage (52, 52'), there is a level translator (50) for adapting the voltage level of the microprocessor (45) for the generation of the driving signals for the end stage.

12. Motor according to one of the claims 9 to 11, characterised thereby, that the microprocessor control possesses two analog-to-digital convertors (37, 38), of which on lies across the input voltage of the source of direct current, while the other is applied across a partial voltage which arises as voltage drop across a resistor (55) flowed through by the load current.

13. Motor according to one of the claims 9 to 12, characterised thereby, that the microprocessor control displays a voltage regulator (30), which lies across the input voltage of the source of direct current and in front of which is connected a diode (32) as protection against incorrect polarity, for the generation of an operating voltage.

14. Motor according to one of the claims 1 to 9, characterised thereby, that the microprocessor (45), as equipment for the generation of the driving signals for the end stage, sets the frequency of the polyphase current to its minimum value on the motor being switched on and after the running-up of the motor raises it to its nominal value at a rate proportional to time or in dependence on the motor load.

15. Motor according to one of the claims 9 to 14, characterised thereby, that the windings of the motor are each divided into at least two respective branches (60, 60', 61, 61'; 62, 62') and that the branches of each winding are switched on and off by way of power transistors, which are one electrically independent of the other, by the end stage (52') of the three-phase invertor in accordance with their drive.

16. Motor according to claim 15, characterised thereby, that the branches (60, 60' 61, 61'; 62, 62') of one motor winding are constructed one alike the other.

## Revendications

1. Moteur asynchrone à courant alternatif pour l'entraînement du compresseur friqorifique d'une unité frigorifique destinée à être utilisée dans des véhicules ayant un réseau embarqué, et qui comporte une unité de commande avec un onduleur triphasé susceptible d'être relié à une source de courant continu pour générer un courant alternatif et avec un convertisseur de fréquence pour commander la fréquence du courant alternatif, caractérisé en ce que la fréquence du courant alternatif est commandée de façon sensiblement inversement proportionnelle au couple de charge du moteur.

2. Moteur selon la revendication 1, caractérisé en ce que la fréquence du courant alternatif est commandée sensiblement de façon inversement proportionnelle au courant de charge du moteur (12).

3. Moteur selon la revendication 2, caractérisé en ce que la commande de la fréquence du courant alternatif est faite en fonction de la chute de tension d'une résistance (55) traversée par le courant de charge.

4. Moteur selon l'une des revendications 1 à 3, caractérisé en ce que lors du branchement du moteur, la fréquence du courant alternatif est commandée à partir d'une valeur prédéterminée inférieure à la fréquence nominale, sensiblement de façon proportionnelle dans le temps, à la limite inférieure de la plage de réglage, puis de façon inversement proportionnelle au couple de charge du moteur au démarrage jusqu'à la fréquence nominale.

5. Moteur selon l'une des revendications 1 à 4, caractérisé en ce que l'unité de commande (20) est munie d'une installation pour commander l'amplitude de la tension du courant alternatif.

6. Moteur selon la revendication 5, caractérisé en ce que l'amplitude de la tension du courant alternatif est maintenue essentiellement constante en tenant compte de la fréquence du courant alternatif pour des amplitudes de tension variables de la source de courant continu.

7. Moteur selon l'une des revendications 1 à 4, caractérisé en ce que l'amplitude de la tension du courant alternatif est abaissée de façon sensiblement proportionnelle pour réduire la fréquence du courant alternatif.

8. Moteur selon la revendication 7, caractérisé en ce que la tension du courant alternatif s'obtient en détectant des parties de la courbe de tension.

9. Moteur selon l'une des revendications 1 à 4, caractérisé en ce que l'onduleur triphasé comporte un étage de sortie (52, 52') comprenant des transistors de puissance avec commande des trois enroulements du moteur, une installation pour générer les signaux de commande pour l'étage de sortie et une commande à microprocesseur (45).

10. Moteur selon la revendication 5, caractérisé en ce que l'étage de sortie (52, 52') réalisé comme commutateur de puissance est muni d'un convertisseur de tension (54) pour générer la tension de commande de l'étage de sortie.

11. Moteur selon la revendication 9 ou 10, caractérisé en ce que l'étage de sortie (52, 52') est précédé d'un convertisseur de niveau (50) pour adapter le niveau de tension du microprocesseur (45) et générer des signaux de commande pour l'étage de sortie.

12. Moteur selon l'une des revendications 9 à 11, caractérisé en ce que la commande à microprocesseur comporte deux convertisseurs analogiques/numériques (37, 38) dont l'un est relié à la tension d'entrée de la source de courant continu et l'autre à une tension partielle qui correspond à la chute de tension aux bornes d'une résistance (55) traversée par le courant de charge.

13. Moteur selon l'une des revendications 9 à 12, caractérisé en ce que la commande à microprocesseur comporte un régulateur de tension (30) relié à la tension d'entrée de la source de courant continu pour générer une tension de fonctionnement, et qui est précédé d'une diode (32) pour la protection contre un erreur de polarité.

14. Moteur selon l'une des revendications 1 à 9, caractérisé en ce que le microprocesseur (45) est réglé comme une installation générant les signaux de commande pour l'étage de sortie (52, 52') lors du branchement du moteur en réglant la fréquence du courant alternatif à sa valeur minimale et en augmentant cette fréquence proportionnellement au temps, après le démarrage du moteur ou en fonction de la charge du moteur jusqu'à la valeur nominale de la fréquence.

15. Moteur selon l'une des revendications 9 à 14, caractérisé en ce que les enroulements du moteur son subdivisés en au moins deux branches (60, 60'; 61, 61' 62, 62') et en ce que les branches de chaque enroulement sont branchées ou coupées de l'étage de sortie (52') dé l'onduleur triphasé en fonction de leur commande par des transistors de puissance indépendants électriquement.

16. Moteur selon la revendication 15, caractérisé en ce que les deux branches (60, 60'; 61, 61' 62, 62') de chaque enroulement du moteur sont identiques.

FIG. 1

FIG.2

FIG.3